# EUROPEAN PATENT SPECIFICATION

(11) **EP 3 965 524 B1**
(45) Date of publication and mention of the grant of the patent: **27.08.2025**
(21) Application number: 20798091.3
(22) Date of filing: 29.04.2020
(51) Int. Cl.: H04W 76/11, H04W 76/14, H04W 8/00, H04L 101/654

(54) **PC5 LINK ESTABLISHMENT METHODS, DEVICES AND SYSTEM**
VERFAHREN, VORRICHTUNGEN UND SYSTEM ZUM AUFBAU EINER PC5-VERBINDUNG
PROCÉDÉS, DISPOSITIFS ET SYSTÈME D'ÉTABLISSEMENT DE LIAISON PC5

(30) Priority: 30.04.2019 CN 201910365449
(43) Date of publication of application: 09.03.2022
(73) Proprietor: VIVO MOBILE COMMUNICATION CO., LTD., Dongguan, Guangdong 523860 (CN)
(72) Inventor: WANG, Wen, Dongguan, Guangdong 523860 (CN); LIANG, Jing, Dongguan, Guangdong 523860 (CN); ZHENG, Qian, Dongguan, Guangdong 523860 (CN)
(74) Representative: Lavoix
(86) International application number: PCT/CN2020/087843
(87) International publication number: WO 2020/221308

(56) References cited:
- EP-A1- 3 911 107
- WO-A1-2019/061180
- CN-A- 105 706 474
- CN-A- 106 470 380
- US-A1- 2015 004 901
- US-A1- 2017 245 245
- "3rd Generation Partnership Project; Technical Specification Group Services and System Aspects; Architecture enhancements for 5G System (5GS) to support Vehicle-to-Everything (V2X) services (Release 16)", 3GPP STANDARD; TECHNICAL SPECIFICATION; 3GPP TS 23.287, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.0, 16 April 2019 (2019-04-16), pages 1 - 40, XP051723434
- LG ELECTRONICS: "Solution#11 update", vol. SA WG2, no. West Palm Beach, USA; 20181126 - 20181130, 29 November 2018 (2018-11-29), XP051564222, Retrieved from the Internet <URL:http://www.3gpp.org/ftp/Meetings%5F3GPP%5FSYNC/SA2/Docs/S2%2D1812850%2Ezip> [retrieved on 20181129]
- QUALCOMM INCORPORATED: "Content and format of User Info parameter for one-to-one ProSe direct communication", vol. CT WG1, no. Nashville (TN), USA; 20160111 - 20160115, 6 January 2016 (2016-01-06), XP051061632, Retrieved from the Internet <URL:http://www.3gpp.org/ftp/tsg_ct/WG1_mm-cc-sm_ex-CN1/TSGC1_95bis_Nashville/docs/> [retrieved on 20160106]
- 3GPP: "3rd Generation Partnership Project; Technical Specification Group Core Network and Terminals; Proximity-services (ProSe) User Equipment (UE) to ProSe function protocol aspects; Stage 3 (Release 15)", 3GPP TS 24.334 V15.2.0 (2018-09), 30 September 2018 (2018-09-30), XP051487060, DOI: 20200630144707A

## Description

### TECHNICAL FIELD

Embodiments of this disclosure relate to the field of communications technologies, and in particular, to methods for PC5 link establishment, UEs, a system and a computer-readable storage medium.

### BACKGROUND

With the continuous development of communications technologies, vehicle to X (Vehicle to X, V2X) technologies such as communication interactions of vehicle to vehicle (Vehicle to Vehicle, V2V), vehicle to pedestrian (Vehicle to Pedestrian, V2P), and vehicle to infrastructure (Vehicle to Infrastructure, V2I) have emerged. V2X services such as V2V and V2P may be transmitted through a PC5 interface between user equipments (User Equipment, UE).

For example, currently for transmitting a 5G NR-based V2X service between UE 1 and UE 2 through a PC5 interface, a PC5 link needs to be established between UE 1 and UE 2 in advance. Specifically, UE 1 broadcasts a direct communication request message (hereinafter referred to as direct communication request message 1) that carries at least a layer 2 address of UE 1. In this case, UE 2 near UE 1 can reply to UE 1 with a direct communication accept message after UE 2 receives direct communication request message 1. Thus, UE 1 can establish the PC5 link with UE 2.

However, in the foregoing process, in one aspect, when UE 1 needs to establish another PC5 link for the same service with another UE, UE 1 again broadcasts a direct communication request message in which the layer 2 address of UE 1 may have been changed. Therefore, UE 2 may establish another PC5 link with UE 1 after receiving the direct communication request message broadcast again. In other words, a plurality of PC5 links for the same service may be established between UE 1 and UE 2, resulting in waste of air interface resources. In another aspect, when the foregoing direct communication request message 1 also carries identifiers of a plurality of UEs, only some of the UEs may reply to UE 1 with direct communication accept messages. As a result, UE 1 may fail to identify which UEs accept the direct communication request, further leading to a PC5 link establishment failure. Therefore, in the foregoing two aspects, PC5 links between UEs cannot be well established.

The document 3GPP TS 23.287 (Technical Specification Group Services and System Aspects; Architecture enhancements for 5G System (SGS) to support Vehicle-to-Everything (V2X) services (Release 16)) discusses layer-2 link establishment procedure for unicast mode of V2X communication over PC5. The document LG ELECTRONICS ("Solution#11 update", 3GPP DRAFT; S2-1812850) discusses UE oriented layer 2 link establishment procedure. The document QUALCOMM INCORPORATED ("Content and format of User Info parameter for one-to-one Prose direct communication", 3GPP DRAFT; C1-160351) discusses how to implement the above-mentioned stage 2 requirements in stage 3 and to propose a way forward. US 2015/004901 A1 provides a method and apparatus for performing D2D communication. The method includes being assigned a transmission and reception indicator and an index during D2D connection setup between a User Equipment (UE) and a Base Station (BS) by the UE, the transmission and reception indicator indicating a transmission role or a reception role and the index indicating another UE for D2D communication, receiving the transmission and reception indicator, the index, and resource information for the D2D communication on a control channel by the UE, and performing, by the UE, a transmission operation or a reception operation to or from the other UE indicated by the index in resources indicated by the resource information according to the transmission role or the reception role indicated by the transmission and reception indicator. EP3911107A1 provides a connection establishment method, a terminal device, and a network device, where the connection establishment method includes: sending a first request message to a network device, where the first request message is used to request, from the network device, related information of a unicast connection between the first terminal device and a second terminal device; and receiving a first response message sent by the network device.

### SUMMARY

According to a first aspect, the present invention provides a method for PC5 link establishment, performed by a first UE, as defined by independent claim 1. According to a second aspect, the present invention provides a method for PC5 link establishment, performed by a second UE, as defined by independent claim 4. According to a third aspect, the present invention provides a UE as defined by independent claim 7. According to a fourth aspect, the present invention provides a UE as defined by independent claim 8. According to a fifth aspect, the present invention provides a communications system as defined by independent claim 9. According to a sixth aspect, the present invention provides a computer-readable storage medium as defined by independent claim 10.

### BRIEF DESCRIPTION OF DRAWINGS

FIG. 1 is a schematic architectural diagram of a communications system according to an embodiment of this disclosure;
FIG. 2 is a first flowchart of a method for PC5 link establishment according to an embodiment of this disclosure;
FIG. 3 is a second flowchart of a method for PC5 link establishment according to an embodiment of this disclosure;
FIG. 4 is a schematic structural diagram of UE according to an embodiment of this disclosure;
FIG. 5 is a schematic structural diagram of another UE according to an embodiment of this disclosure; and
FIG. 6 is a schematic diagram of hardware of UE according to an embodiment of this disclosure.

### DESCRIPTION OF EMBODIMENTS

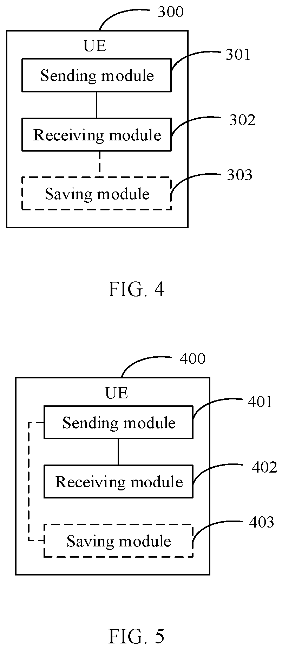

In particular, the embodiments referring to figures 4-5 are not according to the invention and are present for illustration purposes only. The following clearly and completely describes the technical solutions in the embodiments of this disclosure with reference to the accompanying drawings in the embodiments of this disclosure. Apparently, the described embodiments are merely some rather than all of the embodiments of this disclosure. All other embodiments obtained by persons of ordinary skill in the art without creative efforts based on the embodiments of this disclosure shall fall within the protection scope of this disclosure.

In the embodiments of this disclosure, terms such as "an example" or "for example" are used to represent examples, illustrations, or explanations. Any embodiment or design solution described as "an example" or "for example" in the embodiments of this disclosure shall not be interpreted as being more preferred or advantageous than other embodiments or design solutions. Specifically, the terms such as "an example" or "for example" are used to present related concepts in a specific manner.

The following first explains some nouns/terms in the claims and the specification of this application as an example.

In the descriptions of the embodiments of this disclosure, "a plurality of" means two or more than two, for example, a plurality of processing units mean two or more processing units; a plurality of elements mean two or more elements; or the like, unless otherwise specified.

The term "and/or" in the specification describes an association relationship for describing associated objects and represents that three relationships may exist. For example, A and/or B may represent the following three cases: Only A exists, both A and B exist, and only B exists. The symbol "/" herein indicates an "or" relationship of associated objects. For example, A/B means A or B.

The terms are described as follows:
Provider service identifier (Provider Service Identifier, PSID): indicates a service that UE needs to transmit.
Source layer 2 identifier (source layer2 Identifier, source L2 ID): indicates a layer 2 address of UE that sends a message. For example, if UE 1 sends a message carrying a source layer2 identifier, the source layer2 identifier is a layer 2 address of UE 1.
PC5 link: indicates a unicast link that transmits a service between two UEs through a PC5 interface.

According to a method for PC5 link establishment in this embodiment of this disclosure, first UE sends a direct communication request message, and receives a direct communication accept message sent by second UE, where the direct communication request message carries an identifier of the first UE, and is used to request establishment of a PC5 link, and the direct communication accept message carries an identifier of the second UE, and is used to accept the establishment of the PC5 link with the first UE. In this solution, because the direct communication request message carries the identifier that uniquely identifies the first UE, and the direct communication accept message carries the identifier that uniquely identifies the second UE, the first UE and the second UE can recognize each other. This not only ensures that the PC5 link can be successfully established between the first UE and the second UE, but also ensures that only one PC5 link for a same service is established between the first UE and the second UE. In this way, a PC5 link between UEs can be well established.

The method for PC5 link establishment, the device, and the system in the embodiments of this disclosure may be applied to communications systems, for example, a long term evolution (Long Term Evolution, LTE) system, a new radio (new radio, NR) system, or a plurality of communications fusion systems, and may be specifically applied to transmission of a V2X service, such as V2V or V2P, through a PC5 interface between UEs based on the communications system.

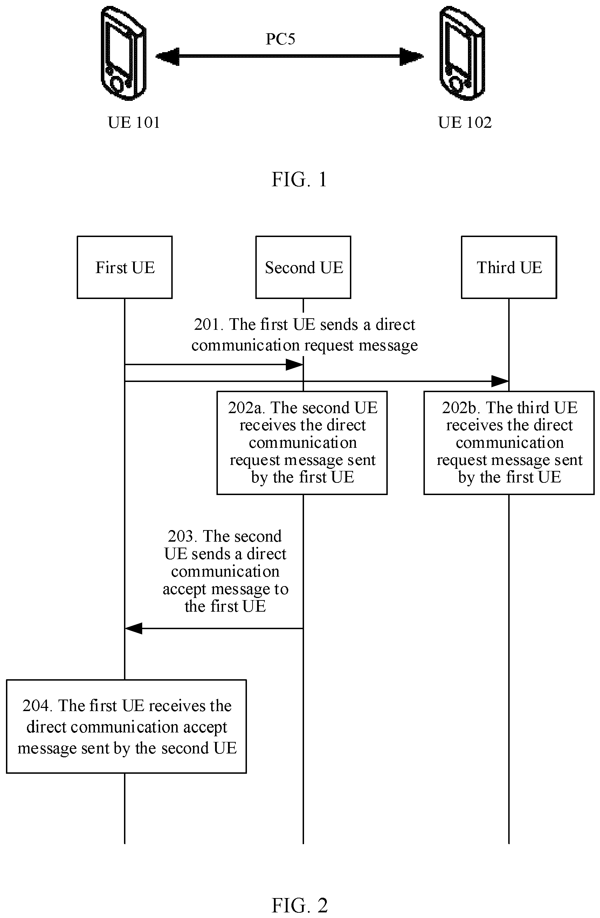

For example, FIG. 1 is a schematic architectural diagram of a communications system according to an embodiment of this disclosure. As shown in FIG. 1, the communications system includes at least one UE (UE 101 and UE 102 in FIG. 1 are used as an example of the at least one UE). As shown in FIG. 1, a PC5 link is established between two UEs of the at least one UE through a PC5 interface, and a service may be transmitted through the established PC5 link.

For example, the UE is a device that provides a user with voice and/or data connectivity, a handheld device with a wireless or wired connection function, or another processing device connected to a wireless modem. The UE may communicate with one or more core network devices through a radio access network (Radio Access Network, RAN). The UE may be a mobile terminal, such as a mobile phone (or referred to as a "cellular" phone) and a computer with a mobile terminal, or may be a portable, pocket-sized, handheld, computer built-in or vehicle-mounted mobile apparatus, which exchanges a voice and/or data with the RAN. For example, the UE is a device such as a personal communication service (Personal Communication Service, PCS) phone, a cordless telephone set, a session initiation protocol (SIP) phone, a wireless local loop (Wireless Local Loop, WLL) station, or a personal digital assistant (Personal Digital Assistant, PDA). The UE may also be referred to as a user agent (User Agent), a terminal device, or the like.

The method for PC5 link establishment provided in this embodiment of this disclosure may be applied to but is not limited to the following two scenarios. The following provides an exemplary description by using an example in which UE 1 is UE that sends a direct communication request message (direct communication request) (a UE that initiates PC5 link establishment), and UE 2 and/or UE 3 is UE(s) that send(s) a direct communication accept message (direct communication accept).

First scenario: In a case that a V2X application layer of UE 1 provides an identifier of UE 2 and an identifier of UE 3 (that is, UE 1 knows an identifier of at least one target UE (user info)), UE 1 broadcasts the direct communication request message carrying a source layer2 identifier, an application layer ID (application layer ID) of UE 2, and an application layer ID of UE 3. After receiving the direct communication request message, UE 2 and UE 3 determine, based on the application layer IDs (for example, based on whether the direct communication request message includes the application layer IDs), whether to send a direct communication accept message to UE 1, and then determine whether to establish a PC5 link with UE 1. A direct communication accept message sent by UE as a reply does not carry an identifier of the UE.

It should be noted that, in the first scenario, if UE 1 receives only one direct communication accept message, because the direct communication accept message does not carry an identifier of a corresponding UE (a UE that sends the direct communication accept message), UE 1 cannot identify whether UE 2 or UE 3 accepts the direct communication request message sent by UE 1. In this case, UE 1 may fail to establish the PC5 links (that is, UE 1 cannot establish the PC5 link with UE 2 or the PC5 link with UE 3).

To resolve the problem in the first scenario, in the method for PC5 link establishment provided in this embodiment of this disclosure, the direct communication request message carries the identifier of UE 1, and the direct communication accept message carries the identifier of the corresponding UE (if UE 2 replies with the direct communication accept message, the direct communication accept message carries the identifier of UE 2 (for example, the application layer ID of UE 2); or if UE 3 replies with the direct communication accept message, the direct communication accept message carries the identifier of UE 3 (for example, the application layer ID of UE 3)). Therefore, when receiving only one direct communication accept message, UE 1 can identify, based on the identifier of the corresponding UE carried in the direct communication accept message, whether UE 2 or UE 3 replies with the direct communication accept message. In this way, UE 1 can successfully establish a PC5 link with the UE (UE 2 or UE 3) that replies with the direct communication accept message.

Second scenario: In a case that UE 1 does not know any UE identifier, UE 1 broadcasts a direct communication request message carrying a source layer2 identifier. After receiving the direct communication request message, UE 2 and/or UE 3 may determine, based on service interests (that is, whether a service needs to be transmitted), whether to send the direct communication accept message to UE 1, and further determine whether to establish the PC5 link with UE 1. A direct communication accept message sent by UE as a reply does not carry an identifier of the UE.

It should be noted that, it can be learned from the description of the second scenario that UE 1 does not need to know whether UE 2 or UE 3 replies to the direct communication request of UE 1. However, if UE 1 has established one PC5 link for service 1 with UE 2, and needs to establish PC5 links for service 1 with more UEs, UE 1 broadcasts a direct communication request message again. However, from the perspective of security, a source layer2 identifier carried in the direct communication request message broadcast again by UE 1 may be different from the source layer2 identifier carried in the previously broadcast direct communication request message (that is, the layer 2 address of UE 1 is changed). In this case, when UE 2 also needs to establish PC5 links for service 1 with more UEs, UE 2 may establish another PC5 link with UE 1 after receiving the direct communication request message broadcast again by UE 1. As a result, UE 1 and UE 2 may establish two or more PC5 links for service 1. However, establishing a plurality of PC5 links for a same service between two UEs is unnecessary, and only leads to waste of air interface resources.

To resolve the problem in the second scenario, in the method for PC5 link establishment in this embodiment of this disclosure, the direct communication request message carries the identifier of UE 1, and the direct communication accept message carries the identifier of the corresponding UE (if UE 2 replies with the direct communication accept message, the direct communication accept message carries the identifier of UE 2; or if UE 3 replies with the direct communication accept message, the direct communication accept message carries the identifier of UE 3). Therefore, after receiving the direct communication accept message, UE 1 can identify, based on the identifier of the corresponding UE carried in the direct communication accept message, whether UE 2 or UE 3 replies with the direct communication accept message. In this way, UE 1 can successfully establish the PC5 link with UE 2 that replies with the direct communication accept message, and/or successfully establish the PC5 link with UE 3 that replies with the direct communication accept message.

It should be noted that the following problem may also exist in the second scenario: Because each UE generates its own layer 2 address, when UE 1 receives direct communication accept messages (carrying layer 2 addresses of UEs) sent by a plurality of UEs, source layer2 identifiers carried in direct communication accept messages sent by different UEs may be the same (this case has a relatively low probability). As a result, UE 1 may fail to determine whether the direct communication accept messages are direct communication accept messages sent by different UEs, or one direct communication accept message sent twice by same UE (for example, the UE does not receive a confirmation message from UE 1 in time).

To resolve the foregoing problem, in the method for PC5 link establishment in this embodiment of this disclosure, the direct communication request message carries the identifier of UE 1, and the direct communication accept message carries the identifier of the corresponding UE (if UE 2 replies with the direct communication accept message, the direct communication accept message carries the identifier of UE 2; or if UE 3 replies with the direct communication accept message, the direct communication accept message carries the identifier of UE 3). Therefore, when receiving a plurality of direct communication accept messages carrying a same source layer2 identifier, UE 1 can identify whether the direct communication accept messages are direct communication accept messages sent by different UEs, or one direct communication accept message sent repeatedly by a same UE (for example, the UE does not receive a confirmation message from UE 1 in time).

In conclusion, the method for PC5 link establishment provided in this embodiment of this disclosure can resolve a problem that a PC5 link between UEs cannot be well established in the related art.

With reference to the accompanying drawings, the following describes in detail a method for PC5 link establishment, a device, and a system provided in the embodiments of this disclosure based on specific embodiments and application scenarios of the embodiments.

Based on the communications system shown in FIG. 1, an embodiment of this disclosure provides a method for PC5 link establishment. As shown in FIG. 2, the method may include the following step 201 to step 204.

Step 201. First UE sends a direct communication request message.

It may be understood that the first UE broadcasts the direct communication request message. All UEs near the first UE can receive the direct communication request message.

Any UE that receives the direct communication request message may or may not reply with a direct communication accept message. This may be specifically determined based on an actual usage status, and is not limited in this embodiment of this disclosure.

For example, if both second UE and third UE are near the first UE, the second UE may receive the direct communication request message, and the third UE may also receive the direct communication request message. The following provides an exemplary description by using an example in which the second UE replies with the direct communication accept message, but the third UE does not reply with the direct communication accept message.

Step 202a. Second UE receives the direct communication request message sent by the first UE.

The second UE receives the direct communication request message broadcast by the first UE. The direct communication request message carries an identifier of the first UE, and is used to request establishment of a PC5 link.

In this embodiment of this disclosure, the identifier of the first UE is used to uniquely identify the first UE. A layer 2 address of the first UE is not the identifier of the first UE.

It should be noted that, in this embodiment of this disclosure, an identifier of UE is an identifier that uniquely identifies the UE. Because a layer 2 address of UE is not an identifier that uniquely identifies the UE, and the UE may have a plurality of different layer 2 addresses at the same time, the layer 2 address of the UE is not the identifier of the UE.

According to the present invention, the identifier of the first UE is either an international mobile subscriber identification number (International Mobile Subscriber Identification Number, IMSI) of the first UE, or a permanent equipment identifier (Permanent Equipment Identifier, PEI) of the first UE.

It should be noted that, after receiving the direct communication request message sent by the first UE, the second UE may determine, based on a preset rule, whether to reply with the direct communication accept message.

Optionally, the direct communication request message further carries the layer 2 address of the first UE, and may further carry other information. This may be specifically determined according to an actual usage requirement, and is not limited in this embodiment of this disclosure.

Step 202b. A third UE receives the direct communication request message sent by the first UE.

The third UE does not send the direct communication accept message to the first UE.

Step 203. The second UE sends a direct communication accept message to the first UE.

Step 204. The first UE receives the direct communication accept message sent by the second UE.

The direct communication accept message carries an identifier of the second UE, and is used to accept the establishment of the PC5 link with the first UE.

The identifier of the second UE is used to uniquely identify the second UE. A layer 2 address of the second UE is not the identifier of the second UE.

The identifier of the second UE is either an IMSI of the second UE, or a PEI of the second UE.

Optionally, the direct communication accept message further carries the layer 2 address of the second UE, and may also carry other information. This may be specifically determined according to an actual usage requirement, and is not limited in this embodiment of this disclosure.

According to the method for PC5 link establishment in this embodiment of this disclosure, the first UE sends sends the direct communication request message, and receives receives the direct communication accept message sent by the second UE, where the direct communication request message carries the identifier of the first UE, and is used to request the establishment of the PC5 link, and the direct communication accept message carries the identifier of the second UE, and is used to accept the establishment of the PC5 link with the first UE. In this solution, because the direct communication request message carries the identifier that uniquely identifies the first UE, and the direct communication accept message carries the identifier that uniquely identifies the second UE, the first UE and the second UE can recognize each other. This not only ensures that the PC5 link can be successfully established between the first UE and the second UE, but also ensures that only one PC5 link for a same service is established between the first UE and the second UE. In this way, a PC5 link between UEs can be well established.

In the foregoing first scenario, optionally, the direct communication request message further carries an identifier of at least one target UE. An identifier of each target UE in the identifier of the at least one target UE may uniquely identify the target UE. The identifier of each target UE may be an application layer ID of the target UE, an IMSI of the target UE, a PEI of the target UE, or another identifier that is used to uniquely identify the target UE. This is not limited in this embodiment of this disclosure.

The direct communication request message is specifically used to request establishment of a PC5 link with the at least one target UE. Specifically, the direct communication request message is used to request establishment of a PC5 link with each of the at least one target UE. The identifier of the at least one target UE may include the identifier of the second UE (in this case, the second UE is a target UE), or may not include the identifier of the second UE (in this case, the second UE is not the target UE). This may be specifically determined according to an actual usage requirement, and is not limited in this embodiment of this disclosure.

For example, step 203 may be specifically implemented by using the following step 203a.

Step 203a. In a case that the identifier of the at least one target UE includes the identifier of the second UE, the second UE sends the direct communication accept message to the first UE.

It may be understood that, in a case that the second UE detects that the identifier of the at least one target UE that is carried in the direct communication request message includes the identifier of the second UE, the second UE sends the direct communication accept message to the first UE.

It should be noted that, in a case that the third UE detects that the identifier of the at least one target UE that is carried in the direct communication request message does not include the identifier of the third UE, the third UE dost not reply to the direct communication request message (that is, the third UE does not send the direct communication accept message to the first UE).

In this embodiment of this disclosure, the identifier of the at least one target UE carried in the direct communication request message can identify target UE with which the first UE needs to establish a PC5 link. Therefore, the first UE can establish a better PC5 link.

It should be noted that, in the foregoing first scenario, in this embodiment of this disclosure, the second UE may further determine, with reference to information that is in the identifier of the at least one target UE and that is different from the identifier of the second UE, whether to send the direct communication accept message to the first UE. This may be specifically determined according to an actual usage requirement, and is not limited in this embodiment of this disclosure.

The direct communication request message further carries an identifier of a first service. The identifier of the first service is used to indicate the first service. The target UE is specifically UE that is in the at least one target UE and that needs to transmit the first service.

For example, step 203a may be specifically implemented by using the following step 203a1.

Step 203a1. In a case that the identifier of the at least one target UE includes the identifier of the second UE, and the second UE needs to transmit the first service, the second UE sends the direct communication accept message to the first UE.

It may be understood that, in a case that the second UE detects that the direct communication accept message carries the identifier of the at least one target UE and the identifier of the first service, detects that the identifier of the at least one target UE includes the identifier of the second UE, and determines that the second UE needs to transmit the first service (that is, the second UE is a target UE), the second UE sends the direct communication accept message to the first UE.

It should be noted that, in a case that the third UE detects that the identifier of the at least one target UE does not include the identifier of the third UE, and/or, determines that the third UE does not need to transmit the first service, the third UE does not reply to the direct communication request message.

In this embodiment of this disclosure, the identifier of the at least one target UE and the identifier of the first service that are carried in the direct communication request message can further identify the target UE with which the first UE needs to establish the PC5 link. Therefore, the first UE can establish a better PC5 link.

The direct communication request message further carries an identifier of a first service. The identifier of the first service is used to indicate the first service. The direct communication request message is specifically used to request the establishment of the PC5 link with the target UE. The target UE is UE that needs to transmit the first service.

Step 203 is specifically implemented by using the following step 203b.

Step 203b. In a case that the second UE needs to transmit the first service, the second UE sends the direct communication accept message to the first UE.

It may be understood that, in a case that the second UE detects that the direct communication request message carries the identifier of the first service, and the second UE needs to transmit the first service, the second UE sends the direct communication accept message to the first UE.

It should be noted that, in a case that the third UE detects that the direct communication request message carries the identifier of the first service, but the third UE does not need to transmit the first service, the third UE does not reply to the direct communication request message.

In this embodiment of this disclosure, the identifier of the first service carried in the direct communication request message can further identify the target UE with which the first UE needs to establish the PC5 link, and help UE (for example, the second UE) that receives the direct communication request message to determine, based on the identifier of the first service, whether to reply to the direct communication request message. Therefore, the first UE can establish a better PC5 link.

Optionally, the direct communication accept message further carries the identifier of the first service, where the direct communication accept message is specifically used to accept establishment of a PC5 link with the first UE for transmitting the first service.

It may be understood that, the direct communication accept message further carries the identifier of the first service, which can clearly indicate that the second UE accepts the establishment of the PC5 link with the first UE for transmitting the first service, helping the first UE establish the PC5 link.

It should be noted that, in the foregoing second scenario, in this embodiment of this disclosure, the second UE may further determine, with reference to information that is different from the identifier of the first service, whether to send the direct communication accept message to the first UE. This may be specifically determined according to an actual usage requirement, and is not limited in this embodiment of this disclosure.

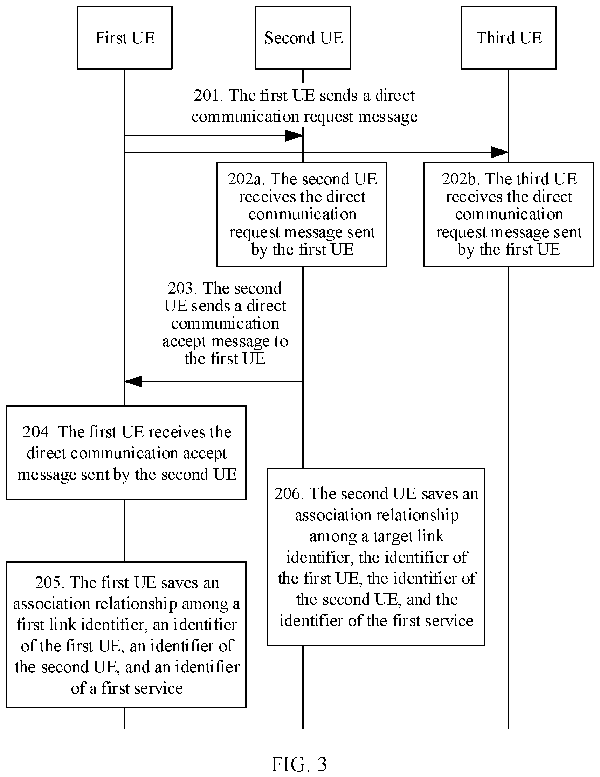

With reference to FIG. 2, as shown in FIG. 3, after step 204, the method for PC5 link establishment provided in this embodiment of this disclosure further includes the following step 205 and step 206.

Step 205. The first UE saves an association relationship among a first link identifier, an identifier of the first UE, an identifier of the second UE, and an identifier of a first service.

The first link identifier is used to indicate the PC5 link (hereinafter referred to as first link) established between the first UE and the second UE.

The first link identifier is an identifier generated by the first UE according to its own requirements to indicate the PC5 link established between the first UE and the second UE. For a specific generation method, refer to any related art. This is not limited in this embodiment of this disclosure.

According to the present invention, the first UE saves the association relationship (hereinafter referred to as first association relationship) among the first link identifier, the identifier of the first UE, the identifier of the second UE, and the identifier of the first service in text of the first link in the first UE. For a format of the link text, refer to any related art. Details are not described herein. Optionally, the first association relationship may be specifically an association relationship among the first link identifier, the identifier of the first UE, the identifier of the second UE, the identifier of the first service, the layer 2 address of the first UE, and the layer 2 address of the second UE.

The first UE saves the first association relationship, to identify the second UE more conveniently, thereby helping the first UE establish the PC5 link with the second UE.

Step 206. The second UE saves an association relationship among a target link identifier, the identifier of the first UE, the identifier of the second UE, and the identifier of the first service.

The target link identifier is used to indicate the PC5 link (the same as the first link in step 205) established between the first UE and the second UE.

The target link identifier is an identifier generated by the second UE according to its own requirements to indicate the PC5 link established between the first UE and the second UE. For a specific generation method, refer to any related art. This is not limited in this embodiment of this disclosure.

According to the present invention, the second UE saves a the association relationship (hereinafter referred to as second association relationship) among the target link identifier, the identifier of the first UE, the identifier of the second UE, and the identifier of the first service in text of the first link in the second UE. For a format of the link text, refer to any related art. Details are not described herein. Optionally, the second association relationship may be specifically an association relationship among the target link identifier, the identifier of the first UE, the identifier of the second UE, the identifier of the first service, the layer 2 address of the first UE, and the layer 2 address of the second UE.

It should be noted that, the first link identifier may be the same as or different from the target link identifier. This may be specifically determined according to an actual usage requirement, and is not limited in this embodiment of this disclosure.

It should be noted that step 205 is executed after step 204. However, neither an execution sequence of step 206 and step 203 nor an execution sequence of step 206 and step 204 is limited in this embodiment of this disclosure. For example, the execution sequence of step 206 and step 203 is not limited. Step 203 may be executed before or after step 206, or step 203 and step 206 may be executed simultaneously.

The second UE saves the second association relationship, to identify the first UE more conveniently. Therefore, the second UE can better establish the PC5 link with the first UE.

The following describes in detail specific establishment processes of the two PC5 links provided in this embodiment of this disclosure by using an example in which UE 1 (the first UE) establishes the PC5 links with UE 2 (the second UE) and UE 3 (the third UE) respectively and the identifier of the UE is the application layer ID of the UE.

The specific establishment process of the first PC5 link is as follows (please note that in the following the application layer ID is mentioned as an example of the identifier of the first or second UE; however, according to the invention, said identifier of an UE must be either the IMSI of the UE or the PEI of the UE): 1. In a case that a V2X application layer of UE 1 provides an application layer ID of UE 2 and an application layer ID of UE 3, UE 1 sends the direct communication request message through broadcasting, where the direct communication request message carries the identifier of the first service, the layer 2 address of UE 1, the application layer ID of UE 1, the application layer ID of UE 2, and the application layer ID of UE 3. 2. After receiving the direct communication request message sent by UE 1, UE 2 detects that the direct communication request message carries the application layer ID of UE 2, and sends to UE 1 the direct communication accept message carrying the identifier of the first service, the layer 2 address of UE 2, and the application layer ID of UE 2. After receiving the direct communication request message sent by UE 1, UE 3 does not send the direct communication accept message to UE 1, although it detects that the direct communication request message carries the application layer ID of UE 3. After receiving the direct communication request message sent by UE 1, UE 4 does not send a direct communication accept message to UE 1 because it detects that the direct communication request message does not carry an application layer ID of UE 4. 3. UE 2 creates and saves text (hereinafter referred to as text 1) of a PC5 link (hereinafter referred to as PC5 link 1) used to transmit the first service with UE 1 (the first association relationship among identifier 1 of PC5 link 1, the layer 2 address of UE 1, the layer 2 address of UE 2, the identifier of the first service, the application layer ID of UE 1, and the application layer ID of UE 2 is stored in text 1, where identifier 1 of PC5 link 1 is generated by UE 2). UE 1 creates and saves text (hereinafter referred to as text 2) of PC5 link 1 (the second association relationship among identifier 2 of PC5 link 1, the layer 2 address of UE 1, the layer 2 address of UE 2, the identifier of the first service, the application layer ID of UE 1, and the application layer ID of UE 2 is stored in text 2, where identifier 2 of PC5 link 1 is generated by UE 1, and may be different from identifier 1 of PC5 link 1). After UE 2 creates text 1 and UE 1 creates text 2, PC5 link 1 between UE 1 and UE 2 is successfully established, and UE 1 and UE 2 can transmit the first service through PC5 link 1.

The specific establishment process of the second PC5 link is as follows: 1. In a case that UE 1 does not obtain any UE identifier information through a V2X application layer, UE 1 sends the direct communication request message through broadcasting, where the direct communication request message carries the identifier of the first service, the layer 2 address of UE 1, and the application layer ID of UE 1. 2. If UE 2 needs to transmit the first service after receiving the direct communication request message, UE 2 sends to UE 1 the direct communication accept message carrying the identifier of the first service, the layer 2 address of UE 2, and the application layer ID of UE 2. If UE 3 does not need to transmit the first service after receiving the direct communication request message sent by UE 1, UE 3 does not send a direct communication accept message to UE 1. 3. UE 2 creates and saves text (hereinafter referred to as text 1) of a PC5 link (hereinafter referred to as PC5 link 1) used to transmit the first service with UE 1 (the first association relationship among identifier 1 of PC5 link 1, the layer 2 address of UE 1, the layer 2 address of UE 2, the identifier of the first service, the application layer ID of UE 1, and the application layer ID of UE 2 is stored in text 1, where identifier 1 of PC5 link 1 is generated by UE 2). UE 1 creates and saves text (hereinafter referred to as text 2) of PC5 link 1 (the second association relationship among identifier 2 of PC5 link 1, the layer 2 address of UE 1, the layer 2 address of UE 2, the identifier of the first service, the application layer ID of UE 1, and the application layer ID of UE 2 is stored in text 2, where identifier 2 of PC5 link 1 is generated by UE 1, and may be different from identifier 1 of PC5 link 1). After UE 2 creates text 1 and UE 1 creates text 2, PC5 link 1 between UE 1 and UE 2 is successfully established, and UE 1 and UE 2 can transmit the first service through PC5 link 1.

As shown in FIG. 4, an embodiment of this disclosure provides UE 300. The UE 300 is first UE, and includes a sending module 301 and a receiving module 302. The sending module 301 is configured to send a direct communication request message, where the direct communication request message carries an identifier of the first UE, and is used to request establishment of a PC5 link. The receiving module 302 is configured to receive a direct communication accept message sent by second UE, where the direct communication accept message carries an identifier of the second UE, and is used to accept the establishment of the PC5 link with the first UE.

Optionally, the direct communication request message further carries an identifier of at least one target UE, where the direct communication request message is specifically used to request establishment of a PC5 link with the at least one target UE.

The direct communication request message further carries an identifier of a first service, where the direct communication request message is specifically used to request establishment of a PC5 link with UE that needs to transmit the first service.

The UE 300 further includes a saving module 303. The saving module 303 is configured to: after the receiving module 302 receives the direct communication accept message sent by the second UE, save an association relationship among a first link identifier, the identifier of the first UE, the identifier of the second UE, and the identifier of the first service, where the first link identifier is used to indicate the PC5 link established between the first UE and the second UE.

The direct communication accept message further carries the identifier of the first service, where the direct communication accept message is specifically used to accept establishment of a PC5 link with the first UE for transmitting the first service.

According to the invention, the identifier of the first UE is either an IMSI of the first UE, or a PEI of the first UE; and the identifier of the second UE is either an IMSI of the second UE, or a PEI of the second UE.

The terminal device provided in this embodiment of this disclosure can implement the process in the foregoing embodiment. To avoid repetition, details are not described herein again.

An embodiment of this disclosure provides UE. The UE may be first UE. The first UE may send a direct communication request message, and receive a direct communication accept message sent by second UE, where the direct communication request message carries an identifier of the first UE, and is used to request establishment of a PC5 link, and the direct communication accept message carries an identifier of second UE, and is used to accept the establishment of the PC5 link with the first UE. In this solution, because the direct communication request message carries the identifier that uniquely identifies the first UE, and the direct communication accept message carries the identifier that uniquely identifies the second UE, the first UE and the second UE can recognize each other. This not only ensures that the PC5 link can be successfully established between the first UE and the second UE, but also ensures that only one PC5 link for a same service is established between the first UE and the second UE. In this way, a PC5 link between UEs can be well established.

As shown in FIG. 5, an embodiment of this disclosure provides UE 400. The UE 400 is second UE, and includes a receiving module 401 and a sending module 402. The receiving module 401 is configured to receive a direct communication request message sent by first UE, where the direct communication request message carries an identifier of the first UE, and is used to request establishment of a PC5 link. The sending module 402 is configured to send a direct communication accept message to the first UE, where the direct communication accept message carries an identifier of the second UE, and is used to accept the establishment of the PC5 link with the first UE.

Optionally, the direct communication request message further carries an identifier of at least one target UE, and the sending module 402 is specifically configured to: in a case that the identifier of the at least one target UE includes the identifier of the second UE, send the direct communication accept message to the first UE.

The direct communication request message further carries an identifier of a first service, and the sending module 402 is specifically configured to: in a case that the second UE needs to transmit the first service, send the direct communication accept message to the first UE.

The UE 400 further includes a saving module 403. The saving module 403 is configured to: after the receiving module 401 receives the direct communication request message sent by the first UE, save an association relationship among a target link identifier, the identifier of the first UE, the identifier of the second UE, and the identifier of the first service, where the target link identifier is used to indicate the PC5 link established between the first UE and the second UE.

The direct communication accept message further carries the identifier of the first service, where the direct communication accept message is specifically used to accept establishment of a PC5 link with the first UE for transmitting the first service.

According to the invention, the identifier of the first UE is either an IMSI of the first UE, or a PEI of the first UE; and the identifier of the second UE is either an IMSI of the second UE, or a PEI of the second UE.

The terminal device provided in this embodiment of this disclosure can implement the process in the foregoing embodiment. To avoid repetition, details are not described herein again.

An embodiment of this disclosure provides UE. The UE may be second UE. The second UE may receive a direct communication request message sent by first UE, and send a direct communication accept message to the first UE, where the direct communication request message carries an identifier of the first UE, and is used to request establishment of a PC5 link, and the direct communication accept message carries an identifier of the second UE, and is used to accept the establishment of the PC5 link with the first UE. In this solution, because the direct communication request message carries the identifier that uniquely identifies the first UE, and the direct communication accept message carries the identifier that uniquely identifies the second UE, the first UE and the second UE can recognize each other. This not only ensures that the PC5 link can be successfully established between the first UE and the second UE, but also ensures that only one PC5 link for a same service is established between the first UE and the second UE. In this way, a PC5 link between UEs can be well established.

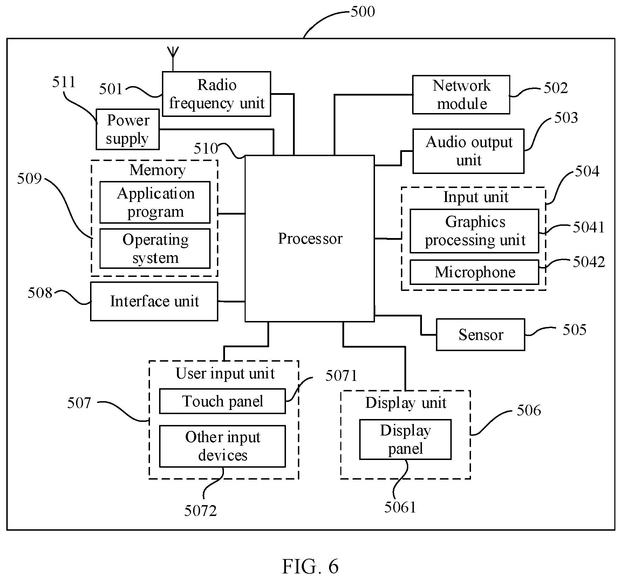

FIG. 6 is a schematic structural diagram of hardware of UE according to an embodiment of this disclosure. The UE 500 includes but is not limited to: a radio frequency unit 501, a network module 502, an audio output unit 503, an input unit 504, a sensor 505, a display unit 506, a user input unit 507, an interface unit 508, a memory 509, a processor 510, a power supply 511, and the like. A person skilled in the art may understand that a structure of the UE 500 shown in FIG. 6 does not constitute a limitation on the UE, and the UE 500 may include more or fewer components than those shown in the figure, or some components may be combined, or there may be a different component arrangement. In this embodiment of this disclosure, the UE 500 includes but is not limited to: a mobile phone, a tablet computer, a notebook computer, a palmtop computer, a vehicle-mounted UE, a wearable device, a pedometer, or the like.

The radio frequency unit 501 is configured to: send a direct communication request message, where the direct communication request message carries an identifier of first UE, and is used to request establishment of a PC5 link; and receive a direct communication accept message sent by second UE, where the direct communication accept message carries an identifier of the second UE, and is used to accept the establishment of the PC5 link with the first UE.

An embodiment of this disclosure provides UE. The UE may be first UE. The first UE may send a direct communication request message, and receive a direct communication accept message sent by second UE, where the direct communication request message carries an identifier of the first UE, and is used to request establishment of a PC5 link, and the direct communication accept message carries an identifier of second UE, and is used to accept the establishment of the PC5 link with the first UE. In this solution, because the direct communication request message carries the identifier that uniquely identifies the first UE, and the direct communication accept message carries the identifier that uniquely identifies the second UE, the first UE and the second UE can recognize each other. This not only ensures that the PC5 link can be successfully established between the first UE and the second UE, but also ensures that only one PC5 link for a same service is established between the first UE and the second UE. In this way, a PC5 link between UEs can be well established.

Alternatively, the radio frequency unit 501 is configured to: receive a direct communication request message sent by first UE, where the direct communication request message carries an identifier of the first UE, and is used to request establishment of a PC5 link; and send a direct communication accept message to the first UE, where the direct communication accept message carries an identifier of the second UE, and is used to accept the establishment of the PC5 link with the first UE.

An embodiment of this disclosure provides UE. The UE may be second UE. The second UE may receive a direct communication request message sent by first UE, and send a direct communication accept message to the first UE, where the direct communication request message carries an identifier of the first UE, and is used to request establishment of a PC5 link, and the direct communication accept message carries an identifier of the second UE, and is used to accept the establishment of the PC5 link with the first UE. In this solution, because the direct communication request message carries the identifier that uniquely identifies the first UE, and the direct communication accept message carries the identifier that uniquely identifies the second UE, the first UE and the second UE can recognize each other. This not only ensures that the PC5 link can be successfully established between the first UE and the second UE, but also ensures that only one PC5 link for a same service is established between the first UE and the second UE. In this way, a PC5 link between UEs can be well established.

It should be understood that, in this embodiment of this disclosure, the radio frequency unit 501 may be configured to transmit and receive a signal in an information transmitting/receiving or call process. Specifically, the radio frequency unit 501 receives downlink data from a base station and transmits the downlink data to the processor 510 for processing; and transmits uplink data to the base station. Generally, the radio frequency unit 501 includes but is not limited to an antenna, at least one amplifier, a transceiver, a coupler, a low noise amplifier, a duplexer, and the like. In addition, the radio frequency unit 501 may also communicate with a network and another device via a wireless communications system.

The UE 500 provides the user with wireless broadband Internet access by using the network module 502, for example, helps the user send or receive an email, browse a web page, access streaming media, and the like.

The audio output unit 503 may convert audio data received by the radio frequency unit 501 or the network module 502 or stored in the memory 509 into an audio signal and output the audio signal as a sound. In addition, the audio output unit 503 may further provide an audio output (for example, a call signal reception sound or a message reception sound) related to a specific function performed by the UE 500. The audio output unit 503 includes a speaker, a buzzer, a receiver, and the like.

The input unit 504 is configured to receive an audio or video signal. The input unit 504 may include a graphics processing unit (Graphics Processing Unit, GPU) 5041 and a microphone 5042. The graphics processing unit 5041 processes image data of a static picture or a video obtained by an image capture apparatus (for example, a camera) in an image capture mode or a video capture mode. A processed image frame may be displayed on the display unit 506. An image frame processed by the graphics processing unit 5041 may be stored in the memory 509 (or another storage medium) or transmitted by the radio frequency unit 501 or the network module 502. The microphone 5042 can receive sounds and process such sounds into audio data. The processed audio data may be converted in a call mode into a format that can be sent by the radio frequency unit 501 to a mobile communication base station for outputting.

The UE 500 further includes at least one sensor 505, for example, an optical sensor, a motion sensor, and another sensor. Specifically, the optical sensor includes an ambient light sensor and a proximity sensor, where the ambient light sensor can adjust luminance of the display panel 5061 based on brightness of ambient light, and the proximity sensor can turn off the display panel 5061 and/or backlight when the UE 500 is moved to an ear. As a type of motion sensor, an accelerometer sensor can detect magnitudes of accelerations in all directions (usually three axes), can detect a magnitude and a direction of gravity when the mobile phone is in a static state, and can be applied to UE posture recognition (such as screen switching between portrait and landscape, related games, and magnetometer posture calibration), functions related to vibration recognition (such as pedometer and tapping), and the like. The sensor 505 may also include a fingerprint sensor, a pressure sensor, an iris sensor, a molecular sensor, a gyroscope, a barometer, a hygrometer, a thermometer, an infrared sensor, and the like. Details are not described herein.

The display unit 506 is configured to display information input by the user or information provided to the user. The display unit 506 may include the display panel 5061. The display panel 5061 may be configured in a form of a liquid crystal display (Liquid Crystal Display, LCD), an organic light-emitting diode (Organic Light-Emitting Diode, OLED), or the like.

The user input unit 507 may be configured to receive input digit or character information and generate key signal input related to user setting and function control of the UE 500. Specifically, the user input unit 507 includes a touch panel 5071 and other input devices 5072. The touch panel 5071 is also referred to as a touchscreen, and may collect a touch operation of the user on or near the touch panel (for example, an operation performed on or near the touch panel 5071 by the user by using any appropriate object or accessory such as a finger or a stylus). The touch panel 5071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into touch point coordinates, transmits the touch point coordinates to the processor 510, and receives and executes a command transmitted by the processor 510. In addition, the touch panel 5071 may be implemented in a plurality of forms, for example, as a resistive, capacitive, infrared, or surface acoustic wave touch panel. In addition to the touch panel 5071, the user input unit 507 may further include other input devices 5072. Specifically, the other input devices 5072 may include but are not limited to a physical keyboard, a function key (for example, a volume control key or a power on/off key), a trackball, a mouse, and a joystick. Details are not described herein.

Further, the touch panel 5071 may cover the display panel 5061. When detecting a touch operation on or near the touch panel 5071, the touch panel 5071 transmits the touch operation to the processor 510 for determining a type of the touch event. Then, the processor 510 provides a corresponding visual output on the display panel 5061 based on the type of the touch event. Although in FIG. 6, the touch panel 5071 and the display panel 5061 act as two separate parts to implement input and output functions of the UE 500, in some embodiments, the touch panel 5071 and the display panel 5061 may be integrated to implement the input and output functions of the UE 500. This is not specifically limited herein.

The interface unit 508 is an interface connecting an external apparatus to the UE 500. For example, the external apparatus may include a wired or wireless headphone port, an external power supply (or battery charger) port, a wired or wireless data port, a memory card port, a port for connecting an apparatus with an identification module, an audio input/output (I/O) port, a video I/O port, a headset port, or the like. The interface unit 508 may be configured to receive input (for example, data information and power) from the external apparatus, and transmit the received input to one or more elements of the UE 500, or may be configured to transmit data between the UE 500 and the external apparatus.

The memory 509 may be configured to store software programs and various data. The memory 509 may mainly include a program storage area and a data storage area. The program storage area may store an operating system, an application program required for at least one function (for example, a sound play function and an image play function), and the like. The data storage area may store data created based on use of the mobile phone (for example, audio data and a phone book), and the like. In addition, the memory 509 may include a high-speed random access memory, and may further include a non-volatile memory such as a disk storage device, a flash memory device, or another volatile solid-state storage device.

The processor 510 is a control center of the UE 500, and is connected to all components of the UE 500 by using various interfaces and lines. By running or executing a software program and/or module that is stored in the memory 509 and calling data stored in the memory 509, the processor 510 executes various functions of the UE 500 and processes data, so as to perform overall monitoring on the UE 500. The processor 510 may include one or more processing units. Optionally, the processor 510 may integrate an application processor and a modem processor. The application processor mainly processes an operating system, a user interface, an application program, and the like. The modem processor mainly processes wireless communication. It can be understood that the modem processor may alternatively be not integrated in the processor 510.

The UE 500 may further include the power supply 511 (for example, a battery) supplying power to each component. Optionally, the power supply 511 may be logically connected to the processor 510 by using a power management system, so that functions such as charge and discharge management and power consumption management are implemented by using the power management system.

In addition, the UE 500 includes some function modules that are not shown, details of which are not described herein.

Optionally, an embodiment of this disclosure further provides UE, where the UE is first UE, and the UE includes the processor 510 and the memory 509 that are shown in FIG. 6, and a computer program that is stored in the memory 509 and capable of running on the processor 510. When the computer program is executed by the processor 510, the processes of the foregoing method embodiments are implemented, with the same technical effects achieved. To avoid repetition, details are not described again herein.

Optionally, an embodiment of this disclosure further provides UE, where the UE is second UE, and the UE includes the processor 510 and the memory 509 that are shown in FIG. 6, and a computer program that is stored in the memory 509 and capable of running on the processor 510. When the computer program is executed by the processor 510, the processes of the foregoing method embodiments are implemented, with the same technical effects achieved. To avoid repetition, details are not described again herein.

An embodiment of this disclosure further provides a communications system. The communications system includes the first UE and the second UE that are provided in the foregoing embodiments.

An embodiment of this disclosure further provides a computer-readable storage medium, where the computer-readable storage medium stores a computer program. When the computer program is executed by the processor 510 shown in FIG. 6, the processes of the foregoing method embodiments are implemented, with the same technical effects achieved. To avoid repetition, details are not described herein again. The computer-readable storage medium may be a read-only memory (Read-Only Memory, ROM for short), a random access memory (Random Access Memory, RAM for short), a magnetic disk, an optical disc, or the like.

It should be noted that the terms "comprise", "include", or any of their variants in this specification are intended to cover a non-exclusive inclusion, such that a process, method, article, or apparatus that includes a list of elements includes not only those elements but also other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software on a necessary universal hardware platform or by hardware only. In most cases, the former is a more preferred implementation though. Based on such an understanding, the technical solutions of this disclosure essentially, or the part contributing to the related art may be implemented in a form of a software product. The computer software product is stored in a storage medium (for example, a ROM/RAM, a magnetic disk, or an optical disc), and includes several instructions for instructing a terminal device (which may be a mobile phone, a computer, a server, an air conditioner, a network device, or the like) to perform the method described in the embodiments of this disclosure.

The foregoing describes the embodiments of this disclosure with reference to the accompanying drawings. However, this disclosure is not limited to the foregoing specific implementations. The foregoing specific implementations are merely illustrative rather than restrictive. As instructed by this disclosure, persons of ordinary skill in the art may develop many other manners, and all such manners fall within the protection scope of this disclosure as defined by the appended claims.

## Claims

1. A method for PC5 link establishment, performed by first user equipment, UE, and comprising:
sending (201) a direct communication request message, wherein the direct communication request message carries an identifier of the first UE, and is used to request establishment of a PC5 link; and
receiving (204) a direct communication accept message sent by second UE, wherein the direct communication accept message carries an identifier of the second UE, and is used to accept the establishment of the PC5 link with the first UE;
wherein the identifier of the first UE is an international mobile subscriber identity, IMSI, of the first UE, or a permanent equipment identifier, PEI, of the first UE; and
the identifier of the second UE is an IMSI of the second UE, or a PEI of the second UE;
wherein the direct communication request message further carries an identifier of a first service, the direct communication request message is specifically used to request establishment of a PC5 link with UE that needs to transmit the first service;
wherein
after the receiving (204) a direct communication accept message sent by second UE, the method further comprises:
saving (205) an association relationship among a first link identifier, the identifier of the first UE, the identifier of the second UE, and the identifier of the first service, wherein the first link identifier is used to indicate the PC5 link established between the first UE and the second UE.

2. The method according to claim 1, wherein the direct communication request message further carries an identifier of at least one target UE, wherein the direct communication request message is specifically used to request establishment of a PC5 link with the at least one target UE.

3. The method according to claim 1 or 2, wherein the direct communication accept message further carries the identifier of the first service, wherein
the direct communication accept message is specifically used to accept establishment of a PC5 link with the first UE for transmitting the first service.

4. A method for PC5 link establishment, performed by second user equipment, UE, and comprising:
receiving (202a) a direct communication request message sent by first UE, wherein the direct communication request message carries an identifier of the first UE, and is used to request establishment of a PC5 link; and
sending (203) a direct communication accept message to the first UE, wherein the direct communication accept message carries an identifier of the second UE, and is used to accept the establishment of the PC5 link with the first UE;
wherein the identifier of the first UE is an international mobile subscriber identity, IMSI, of the first UE, or a permanent equipment identifier, PEI, of the first UE; and
the identifier of the second UE is an IMSI of the second UE, or a PEI of the second UE;
wherein the direct communication request message further carries an identifier of a first service, the sending (203) the direct communication accept message to the first UE comprises:
in a case that the second UE needs to transmit the first service, sending the direct communication accept message to the first UE;
wherein
after the receiving (202a) a direct communication request message sent by first UE, the method further comprises:
saving (206) an association relationship among a target link identifier, the identifier of the first UE, the identifier of the second UE, and the identifier of the first service, wherein the target link identifier is used to indicate the PC5 link established between the first UE and the second UE.

5. The method according to claim 4, wherein the direct communication request message further carries an identifier of at least one target UE, wherein the sending (203) a direct communication accept message to the first UE comprises:
in a case that the identifier of the at least one target UE comprises the identifier of the second UE, sending the direct communication accept message to the first UE.

6. The method according to claim 4 or 5, wherein the direct communication accept message further carries the identifier of the first service, wherein
the direct communication accept message is specifically used to accept establishment of a PC5 link with the first UE for transmitting the first service.

7. User equipment UE, comprising a processor, a memory, and a computer program stored in the memory and capable of running on the processor, wherein when the computer program is executed by the processor, the steps of the method for PC5 link establishment according to any one of claims 1 to 3 are implemented.

8. User equipment UE, comprising a processor, a memory, and a computer program stored in the memory and capable of running on the processor, wherein when the computer program is executed by the processor, the steps of the method for PC5 link establishment according to any one of claims 4 to 6 are implemented.

9. A communications system, wherein the communications system comprises the user equipment, UE, according to claim 7 and the UE according to claim 8.

10. A computer-readable storage medium, wherein the computer-readable storage medium stores a computer program, and when the computer program is executed by a processor, the steps of the method for PC5 link establishment according to any one of claims 1 to 6 are implemented.

## Patentansprüche

1. Verfahren zum Aufbauen einer PC5-Verbindung, ausgeführt von einem ersten Benutzergerät (UE) und umfassend:
Senden (201) einer Direktkommunikations-Anforderungsnachricht, wobei die Direktkommunikations-Anforderungsnachricht eine Kennung des ersten UE enthält und verwendet wird, um den Aufbau einer PC5-Verbindung anzufordern; und
Empfangen (204) einer Direktkommunikations-Annahmenachricht, die von einem zweiten UE gesendet wird, wobei die Direktkommunikations-Annahmenachricht eine Kennung des zweiten UE enthält und verwendet wird, um den Aufbau der PC5-Verbindung mit dem ersten UE anzunehmen;
wobei die Kennung des ersten UE eine internationale Mobilteilnehmerkennung (IMSI) des ersten UE oder eine permanente Gerätekennung (PEI) des ersten UE ist; und
die Kennung des zweiten UE eine IMSI des zweiten UE oder eine PEI des zweiten UE ist;
wobei die Direktkommunikations-Anforderungsnachricht ferner eine Kennung eines ersten Dienstes enthält, wobei die Direktkommunikations-Anforderungsnachricht speziell dazu verwendet wird, den Aufbau einer PC5-Verbindung mit dem UE anzufordern, das den ersten Dienst übertragen muss;
wobei
nach dem Empfangen (204) einer Direktkommunikations-Annahmenachricht, die von einem zweiten UE gesendet wurde, das Verfahren ferner Folgendes umfasst:
Speichern (205) einer Assoziationsbeziehung zwischen einer ersten Verbindungskennung, der Kennung des ersten UE, der Kennung des zweiten UE und der Kennung des ersten Dienstes, wobei die erste Verbindungskennung verwendet wird, um die PC5-Verbindung anzuzeigen, die zwischen dem ersten UE und dem zweiten UE aufgebaut wurde.

2. Verfahren nach Anspruch 1, wobei die Direktkommunikations-Anforderungsnachricht ferner eine Kennung von mindestens einem Ziel-UE enthält, wobei die Direktkommunikations-Anforderungsnachricht speziell dazu verwendet wird, den Aufbau einer PC5-Verbindung mit dem mindestens einen Ziel-UE anzufordern.

3. Verfahren nach Anspruch 1 oder 2, wobei die Direktkommunikations-Annahmenachricht ferner die Kennung des ersten Dienstes enthält, wobei
die Direktkommunikations-Annahmenachricht speziell dazu verwendet wird, den Aufbau einer PC5-Verbindung mit dem ersten UE zum Übertragen des ersten Dienstes anzunehmen.

4. Verfahren zum Aufbauen einer PC5-Verbindung, ausgeführt von einem zweiten Benutzergerät (UE) und umfassend:
Empfangen (202a) einer Direktkommunikations-Anforderungsnachricht, die von einem ersten UE gesendet wurde, wobei die Direktkommunikations-Anforderungsnachricht eine Kennung des ersten UE enthält und verwendet wird, um den Aufbau einer PC5-Verbindung anzufordern; und
Senden (203) einer Direktkommunikations-Annahmenachricht an das erste UE, wobei die Direktkommunikations-Annahmenachricht eine Kennung des zweiten UE enthält und verwendet wird, um den Aufbau der PC5-Verbindung mit dem ersten UE anzunehmen;
wobei die Kennung des ersten UE eine internationale Mobilteilnehmerkennung (IMSI) des ersten UE oder eine permanente Gerätekennung (PEI) des ersten UE ist; und
die Kennung des zweiten UE eine IMSI des zweiten UE oder eine PEI des zweiten UE ist;
wobei die Direktkommunikations-Anforderungsnachricht ferner eine Kennung eines ersten Dienstes trägt, wobei das Senden (203) der Direktkommunikations-Annahmenachricht an das erste UE Folgendes umfasst:
in einem Fall, in dem das zweite UE den ersten Dienst übertragen muss, Senden der Direktkommunikations-Annahmenachricht an das erste UE;
wobei
nach dem Empfangen (202a) einer Direktkommunikations-Anforderungsnachricht, die von einem ersten UE gesendet wurde, das Verfahren ferner Folgendes umfasst:
Speichern (206) einer Assoziationsbeziehung zwischen einer Ziel-Verbindungskennung, der Kennung des ersten UE, der Kennung des zweiten UE und der Kennung des ersten Dienstes, wobei die Ziel-Verbindungskennung verwendet wird, um die PC5-Verbindung anzuzeigen, die zwischen dem ersten UE und dem zweiten UE aufgebaut wurde.

5. Verfahren nach Anspruch 4, wobei die Direktkommunikations-Anforderungsnachricht ferner eine Kennung von mindestens einem Ziel-UE enthält, wobei das Senden (203) einer Direktkommunikations-Annahmenachricht an das erste UE Folgendes umfasst:
in dem Fall, dass die Kennung des mindestens einen Ziel-UE die Kennung des zweiten UE umfasst, Senden der Direktkommunikations-Annahmenachricht an das erste UE.

6. Verfahren nach Anspruch 4 oder 5, wobei die Direktkommunikations-Annahmenachricht ferner die Kennung des ersten Dienstes enthält, wobei
die Direktkommunikations-Annahmenachricht speziell dazu verwendet wird, den Aufbau einer PC5-Verbindung mit dem ersten UE zum Übertragen des ersten Dienstes anzunehmen.

7. Benutzergerät (UE), umfassend einen Prozessor, einen Speicher und ein Computerprogramm, das in dem Speicher gespeichert ist und auf dem Prozessor ausgeführt werden kann, wobei bei Ausführung des Computerprogramms durch den Prozessor die Schritte des Verfahrens zum Aufbau einer PC5-Verbindung nach einem der Ansprüche 1 bis 3 implementiert werden.

8. Benutzergerät (UE), umfassend einen Prozessor, einen Speicher und ein Computerprogramm, das in dem Speicher gespeichert ist und auf dem Prozessor ausgeführt werden kann, wobei bei Ausführung des Computerprogramms durch den Prozessor die Schritte des Verfahrens zum Aufbau einer PC5-Verbindung nach einem der Ansprüche 4 bis 6 implementiert werden.

9. Kommunikationssystem, wobei das Kommunikationssystem das Benutzergerät (UE) nach Anspruch 7 und das UE nach Anspruch 8 umfasst.

10. Computerlesbares Speichermedium, wobei das computerlesbare Speichermedium ein Computerprogramm speichert und, wenn das Computerprogramm von einem Prozessor ausgeführt wird, die Schritte des Verfahrens zum Aufbau einer PC5-Verbindung nach einem der Ansprüche 1 bis 6 implementiert werden.

## Revendications

1. Procédé d'établissement d'une liaison PC5, exécutée par un premier équipement d'utilisateur, UE, et comprenant :
l'envoi (201) d'un message de demande de communication directe, dans lequel le message de demande de communication directe contient un identifiant du premier UE et est utilisé pour demander l'établissement d'une liaison PC5 ; et
la réception (204) d'un message d'acceptation de communication directe envoyé par le second UE, dans lequel le message d'acceptation de communication directe contient un identifiant du second UE et est utilisé pour accepter l'établissement de la liaison PC5 avec le premier UE ;
dans lequel l'identifiant du premier UE est une identité internationale d'abonné mobile, IMSI, du premier UE, ou un identifiant d'équipement permanent, PEI, du premier UE ; et
l'identifiant du second UE est un IMSI du second UE ou un PEI du second UE ;
dans lequel le message de demande de communication directe contient en outre un identifiant d'un premier service, le message de demande de communication directe étant spécifiquement utilisé pour demander l'établissement d'une liaison PC5 avec l'UE qui doit transmettre le premier service ;
dans lequel
après la réception (204) d'un message d'acceptation de communication directe envoyé par le second UE, le procédé comprend en outre :
l'enregistrement (205) d'une relation d'association entre un premier identifiant de liaison, l'identifiant du premier UE, l'identifiant du second UE et l'identifiant du premier service, le premier identifiant de liaison étant utilisé pour indiquer la liaison PC5 établie entre le premier UE et le second UE.

2. Procédé selon la revendication 1, dans lequel le message de demande de communication directe contient en outre un identifiant d'au moins un UE cible, le message de demande de communication directe étant spécifiquement utilisé pour demander l'établissement d'une liaison PC5 avec au moins un UE cible.

3. Procédé selon la revendication 1 ou 2, dans lequel le message d'acceptation de la communication directe contient en outre l'identifiant du premier service, dans lequel
le message d'acceptation de la communication directe est spécifiquement utilisé pour accepter l'établissement d'une liaison PC5 avec le premier UE pour la transmission du premier service.

4. Procédé d'établissement d'une liaison PC5, exécutée par un deuxième équipement d'utilisateur, UE, et comprenant :
la réception (202a) d'un message de demande de communication directe envoyé par le premier UE, dans lequel le message de demande de communication directe contient un identifiant du premier UE et est utilisé pour demander l'établissement d'une liaison PC5 ; et
l'envoi (203) d'un message d'acceptation de communication directe au premier UE, dans lequel le message d'acceptation de communication directe contient un identifiant du second UE et est utilisé pour accepter l'établissement de la liaison PC5 avec le premier UE ;
dans lequel l'identifiant du premier UE est une identité internationale d'abonné mobile, IMSI, du premier UE, ou un identifiant d'équipement permanent, PEI, du premier UE ; et
l'identifiant du second UE est un IMSI du second UE ou un PEI du second UE ;
dans lequel le message de demande de communication directe contient en outre un identifiant d'un premier service, l'envoi (203) du message d'acceptation de la communication directe au premier UE comprend :
dans le cas où le second UE doit transmettre le premier service, l'envoi du message d'acceptation de la communication directe au premier UE ;
dans lequel
après la réception (202a) d'un message de demande de communication directe envoyé par le premier UE, le procédé comprend en outre :
l'enregistrement (206) d'une relation d'association entre un identifiant de liaison cible, l'identifiant du premier UE, l'identifiant du second UE et l'identifiant du premier service, l'identifiant de liaison cible étant utilisé pour indiquer la liaison PC5 établie entre le premier UE et le second UE.

5. Procédé selon la revendication 4, dans lequel le message de demande de communication directe contient en outre un identifiant d'au moins un UE cible, dans lequel l'envoi (203) d'un message d'acceptation de communication directe au premier UE comprend :
dans le cas où l'identifiant d'au moins un UE cible comprend l'identifiant du second UE, l'envoi du message d'acceptation de la communication directe au premier UE.

6. Procédé selon la revendication 4 ou 5, dans lequel le message d'acceptation de la communication directe contient en outre l'identifiant du premier service, dans lequel
le message d'acceptation de la communication directe est spécifiquement utilisé pour accepter l'établissement d'une liaison PC5 avec le premier UE pour la transmission du premier service.

7. Équipement utilisateur UE, comprenant un processeur, une mémoire, et un programme informatique qui est stocké dans la mémoire et pouvant être exécuté sur le processeur, dans lequel lorsque le programme informatique est exécuté par le processeur, les étapes du procédé d'établissement de la liaison PC5 selon l'une quelconque des revendications 1 à 3 sont mises en œuvre.

8. Équipement utilisateur UE, comprenant un processeur, une mémoire, et un programme informatique qui est stocké dans la mémoire et pouvant être exécuté sur le processeur, dans lequel lorsque le programme informatique est exécuté par le processeur, les étapes du procédé pour l'établissement de la liaison PC5 selon l'une quelconque des revendications 4 à 6 sont mises en œuvre.

9. Système de communication, dans lequel le système de communication comprend l'équipement utilisateur, UE, selon la revendication 7 et l'UE selon la revendication 8.

10. Support de stockage lisible par ordinateur, dans lequel le support de stockage lisible par ordinateur stocke un programme informatique, et lorsque le programme informatique est exécuté par un processeur, les étapes du procédé d'établissement d'une liaison PC5 selon l'une quelconque des revendications 1 à 6 sont mises en œuvre.
